# EUROPEAN PATENT APPLICATION

(11) **EP 2 360 570 A2**
(43) Date of publication of application: **24.08.2011**
(21) Application number: 11154431.8
(22) Date of filing: 14.02.2011
(51) Int. Cl.: G06F 3/048

(54) **Graphical context short menu**

(30) Priority: 15.02.2010 US 304773 P
(71) Applicant: Research In Motion Limited, Waterloo, ON N2L 3W8 (CA)
(72) Inventor: Stovicek, Thomas Jan, Redwood City CA 94065-1183 (US); Hong, Yoojin, Redwood City CA 94065-1183 (US); Lindsay, Donald James, Waterloo Ontario N2L 3W8 (CA)
(74) Representative: Fennell, Gareth Charles

(57) **Abstract**

A system and method for displaying a graphical context short menu on a display screen of a mobile communication device. The method includes displaying information associated with a contact, receiving a request for a menu and displaying, in response to the request, a graphical context short menu including menu items based on context associated with the displayed information. The graphical context short menu can include an icon associated with the contact. The icon can be an image of the contact, an avatar, and name of the contact. The graphical context short menu can include nine (9) menu options with the icon in the center of the menu. The graphical context short menu can also include a more menu items in the bottom right of the menu.

## Description

### CROSS-RELATED APPLICATIONS

This application claims the benefit of U.S. Provisional Application No. 61/304,773 filed on February 15, 2010, which is incorporated herein by reference in its entirety.

### FIELD OF DISCLOSURE

The present disclosure relates generally to a menu for a communication device. More specifically, the present disclosure relates to a graphical context short menu for a mobile communication device.

### BACKGROUND

With the advent of more robust wireless communications systems, compatible mobile communication devices are becoming more prevalent, as well as advanced. Where in the past such mobile communication devices typically accommodated either voice transmission (cell phones) or text transmission (pagers and PDAs), today's consumer often demands a combination device capable of performing both types of transmissions, including even sending and receiving e-mail. Furthermore, these higher-performance devices can also be capable of sending and receiving other types of data including that which allows the viewing and use of Internet websites. These higher level functionalities necessarily require greater user interaction with the devices through included user interfaces (UIs) which may have originally been designed to accommodate making and receiving telephone calls and sending messages over a related Short Messaging Service (SMS). As might be expected, suppliers of such mobile communication devices and the related service providers are anxious to meet these customer requirements, but the demands of these more advanced functionalities have in many circumstances rendered the traditional user interfaces unsatisfactory, a situation that has caused designers to have to improve the UIs through which users input information and control these sophisticated operations.

Most application programs are menu-driven as opposed to being command-driven. Menu-driven applications provide a list of possible action commands or options from which a user may choose, while command-driven applications require users to enter explicit commands. Thus, menu-driven applications are generally easier for the average user to learn than are command-driven applications. Menus are typically implemented as a list of textual or graphical choices (i.e., menu items) from which a user can choose. Thus, menus allow a user to select a menu item, for example, by pointing to the item with a mouse and then clicking on the item. Examples of other methods of selecting menu items include highlighting an item and then hitting the "return" key or "enter" key, and pressing directly on a menu item through a touch-sensitive screen.

One particularly useful type of menu is a hierarchical menu. Hierarchical menus typically present a parent menu that has selectable menu items. The selection of each menu item normally causes another menu, or submenu, to be displayed next to the currently displayed menu. The submenu has additional menu choices that are related to the selected parent menu item. Also, the parent menu results in the display of the submenu. The depth of a hierarchical menu can extend in this manner to many levels of submenus.

The conventional hierarchical menus generally lay out from left to right across a display screen as menu choices are selected. This menu format provides various advantages such as retaining previous and current menus on the display screen at the same time. This provides a historical menu map as menu selections are made and their corresponding submenus are displayed across the screen. Users can therefore review previous menu selections that have been made while progressing to the most recently displayed menu - thus making it easier to move between different menu items and menu levels.

Although such hierarchical menus provide useful advantages, there are scenarios in which their use is impracticable. One such scenario is when hierarchical menus are used on devices having small display screens. The problems presented when attempting to implement conventional hierarchical menus on small-screen devices have generally discouraged the use of hierarchical menus with such devices.

Hierarchical menus generally lay out across the display screen from left to right. On small-screen devices where the room on the screen is not wide enough to accommodate all of the menus, the menus often lay out across the screen in both directions, from left to right and back again. In this scenario, the menus typically begin to overlap one another, creating various problems. Overlapping menus can be confusing to the user. Overlapping menus can make it difficult for a user to discern previous menu selections which can, in turn, make it difficult to determine how to return to previous menus to make different menu selections. Thus, one of the intended benefits of a hierarchical menu can be undermined when the hierarchical menu is implemented on a small-screen device.

Overlapping menus can also be difficult to work with on small-screen devices (as well as others) that employ pen-based or stylus-based touch-sensitive screens. With such devices, it is often difficult to maintain contact continuity between menus on the screen when the menus are overlapping. In other words, it is easy to move off of menus with small-screen, touch-based devices. If continuity is lost when moving from one menu to another, menus will often disappear from the screen, causing the user to have to go back and reactivate the menu from a prior menu. This problem becomes worse when using pen-based devices that "track". In the present context, the terminology of "tracking" is used to indicate a situation in which a cursor on the screen follows (tracks) the movement of the pen as the pen moves over the screen even though the pen is not touching the screen. Tracking is lost if the pen is pulled too far away from the screen. Thus, pen-based devices that "track" tend to lose more menus when hierarchical menus are employed.

One method of addressing this issue involves displaying submenus in place of a parent menu, and vice versa, when the appropriate menu items are selected from within the parent menus and submenus. Like a typical hierarchical menu, the depth of a hierarchical in-place menu can extend in this manner to many levels of submenus such as second, third, fourth and fifth levels, with submenus being parent menus to other submenus. Parent menu items selected from within parent menus are displayed within submenus as links back to previous parent menus and are separated from that submenu's items by a divider. For example, parent menu item "Launch App" is from a parent menu and thus includes a forward pointer that indicates a submenu will replace the first parent menu upon selection of "Launch App". In each of the submenus, "Launch App" has a backward pointing arrow that facilitates going back to a previous menu in the hierarchy. However, each of the menus provides the full complement of available menu items. This can be overwhelming for a novice user and irritating to an experienced user. This problem is exacerbated to an extent by the addition of a hierarchical history of parent menus added to the list.

Another approach is the use of short menus and full menus. A full or extended menu, lists all available menu items at that particular level and a short menu is a subset of the full menu. The short menu can be a dynamic menu in that a user selects menu items from the corresponding extended menu to be included in the short menu. However, navigating such menus can be difficult when using the navigation tools of a mobile communication device in that a user has to select or highlight the desired menu option when the menu options are in a vertical list.

### BRIEF DESCRIPTION OF THE DRAWINGS

Embodiments of the present application will now be described, by way of example only, with reference to the attached Figures, wherein:

Figure 1A is a front view of a mobile communication device having a reduced QWERTY keyboard in accordance with an exemplary embodiment;

Figure 1B is a front view of a mobile communication device having a full QWERTY keyboard in accordance with an exemplary embodiment;

Figure 2 is a block diagram representing a mobile communication device interacting in a communication network in accordance with an exemplary embodiment;

Figure 3 is a screenshot of a conventional menu in accordance with an exemplary embodiment;

Figure 4 is a screenshot of a graphical context short menu in accordance with an exemplary embodiment;

Figure 5A is a graphical context short menu having nine (9) menu items in a three by three grid in accordance with an exemplary embodiment;

Figure 5B is a graphical context short menu having six (6) menu items in a three by two grid in accordance with an exemplary embodiment;

Figure 5C is a graphical context short menu having three (3) menu items in a three by one grid in accordance with an exemplary embodiment;

Figure 5D is a graphical context short menu showing the layout of the menu in which there are two (2) sets of contextual actions in accordance with an exemplary embodiment;

Figure 6 is a graphical short menu with a single set of contextual actions for an email application in accordance with an exemplary embodiment;

Figure 7 is a graphical short menu with two sets of contextual actions for communicating with a contact in accordance with an exemplary embodiment;

Figure 8A is a graphical context short menu for an existing contact in accordance with an exemplary embodiment;

Figure 8B is a graphical context short menu for a new contact in accordance with an exemplary embodiment;

Figure 8C is a graphical context short menu for editing text in accordance with an exemplary embodiment;

Figure 9A is a screenshot having a graphical context short menu for an attachment in accordance with an exemplary embodiment;

Figure 9B is a screenshot having a graphical context short menu a header bar in accordance with an exemplary embodiment;

Figure 9C is a screenshot having a graphical context short menu in accordance with an exemplary embodiment;

Figure 10A is a screenshot having a graphical context short menu for a meeting event in accordance with an exemplary embodiment;

Figure 10B is a screenshot having a graphical context short menu for a private event in accordance with an exemplary embodiment;

Figure 11A is a screenshot having a graphical context short menu having nine (9) menu items in accordance with an exemplary embodiment;

Figure 11B is a screenshot having a graphical context short menu having six (6) menu items in accordance with an exemplary embodiment;

Figure 11C is a screenshot having a graphical context short menu having three (3) menu items in accordance with an exemplary embodiment;

Figure 12A is a mobile communication device displaying various applications in accordance with an exemplary embodiment;

Figure 12B is a mobile communication device displaying a user selecting a highlighted application to cause a graphical context short menu to be displayed in accordance with an exemplary embodiment;

Figure 12C is a mobile communication device displaying a graphical context short menu in accordance with an exemplary embodiment;

Figure 12D is a mobile communication device displaying a graphical context short menu with a user selecting to have the graphical context short menu disappear in accordance with an exemplary embodiment;

Figure 13 is a flowchart showing a method for using a graphical context short menu in accordance with an exemplary embodiment; and

Figure 14 is a screenshot having another menu listing three (3) calling options in accordance with an exemplary embodiment.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein.

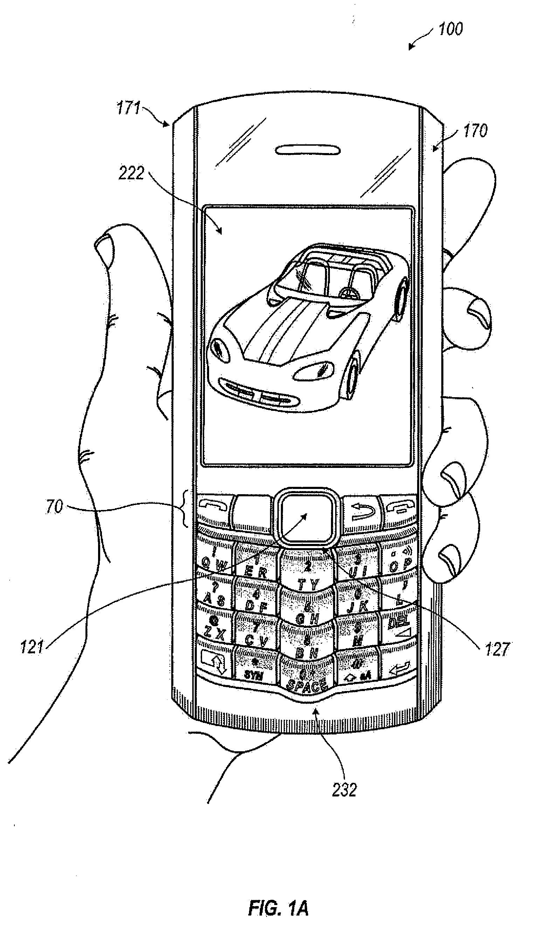

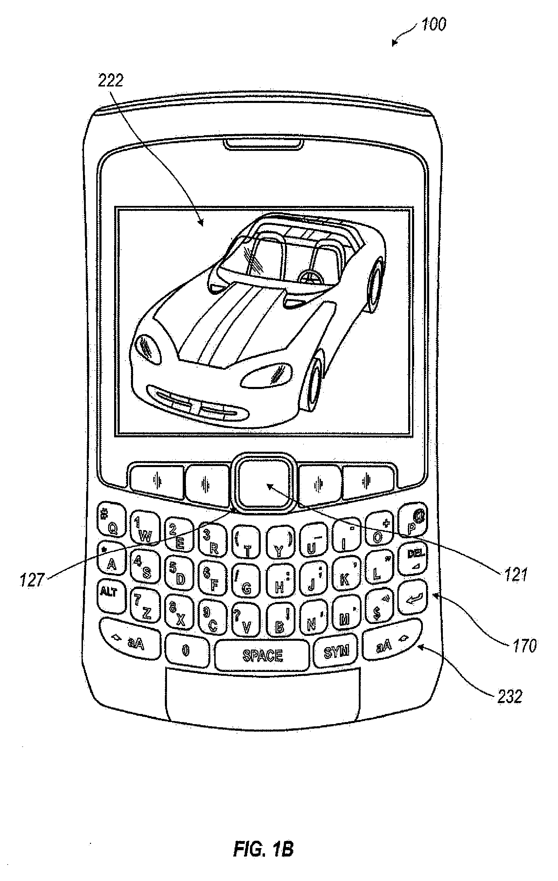

Referring to Figures 1A and 1B, front views of handheld or electronic communication devices 100 having a reduced QWERTY keyboard and a full QWERTY keyboard 232, respectively, with each capable of incorporating a messaging application in accordance with exemplary embodiments are illustrated. Each key of the keyboard 232 can be associated with at least one indicia representing an alphabetic character, a numeral, or a command (such as a space command, return command, or the like). The plurality of the keys having alphabetic characters are arranged in a standard keyboard layout. This standard keyboard layout can be a QWERTY layout (shown in Figures 1A and 1B), a QZERTY layout, a QWERTZ layout, an AZERTY layout, a Dvorak layout, a Russian keyboard layout, a Chinese keyboard layout, or other similar layout. These standard layouts are provided by way of example and other similar standard layouts are considered within the scope of this disclosure. The keyboard layout can be based on the geographical region in which the handheld device is intended for sale. In some examples, the keyboard can be interchangeable such that the user can switch between layouts.

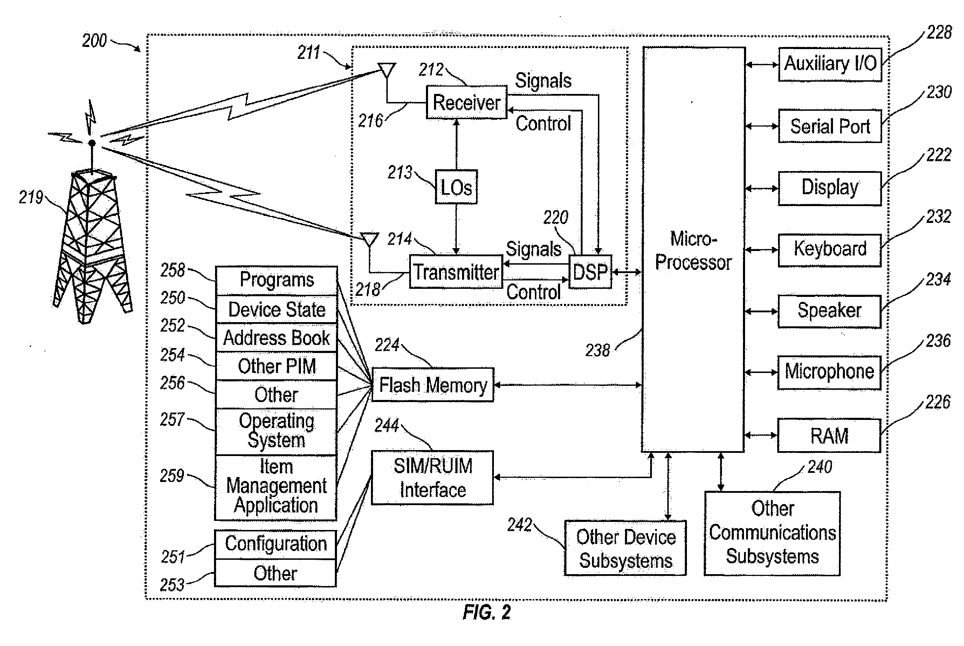

As shown, the exemplary communication devices 100 are communicatively coupled to a wireless network 219 as exemplified in the block diagram of Figure 2. These figures are exemplary only, and those persons skilled in the art will appreciate that additional elements and modifications may be necessary to make the communication device 100 work in particular network environments. While in the illustrated embodiments, the communication devices 100 are smart phones, however, in other embodiments, the communication devices 100 may be personal digital assistants (PDA), laptop computers, desktop computers, servers, or other communication device capable of sending and receiving electronic messages.

Referring to Figure 2, a block diagram of a communication device in accordance with an exemplary embodiment is illustrated. As shown, the communication device 100 includes a microprocessor 238 that controls the operation of the communication device 100. A communication subsystem 211 performs all communication transmission and reception with the wireless network 219. The microprocessor 238 further can be communicatively coupled with an auxiliary input/output (I/O) subsystem 228 which can be communicatively coupled to the communication device 100. Additionally, in at least one embodiment, the microprocessor 238 can be communicatively coupled to a serial port (for example, a Universal Serial Bus port) 230 which can allow for communication with other devices or systems via the serial port 230. A display 222 can be communicatively coupled to microprocessor 238 to allow for displaying of information to an operator of the communication device 100. When the communication device 100 is equipped with the keyboard 232, the keyboard can also be communicatively coupled with the microprocessor 238. The communication device 100 can include a speaker 234, a microphone, 236, random access memory (RAM) 226, and flash memory 224 all of which may be communicatively coupled to the microprocessor 238. Other similar components may be provided on the communication device 100 as well and optionally communicatively coupled to the microprocessor 238. Other communication subsystems 240 and other communication device subsystems 242 are generally indicated as being functionally connected with the microprocessor 238 as well. An example of a communication subsystem 240 is that of a short range communication system such as BLUETOOTH^{®} communication module or a WI-FI^{®} communication module (a communication module in compliance with IEEE 802.11b) and associated circuits and components. Additionally, the microprocessor 238 is able to perform operating system functions and enables execution of programs on the communication device 100. In some embodiments not all of the above components may be included in the communication device 100. For example, in at least one embodiment the keyboard 232 is not provided as a separate component and is instead integrated with a touchscreen as described below. The microprocessor 238 is able to execute a menu program or control program (not shown) for causing the display and control of a graphical context short menu. The menu program can be stored in the other communications subsystems 340 or in other locations on the mobile communication device 100.

The auxiliary I/O subsystem 228 can take the form of a variety of different navigation tools 127 (multi-directional or single-directional) such as a trackpad navigation tool 221 as illustrated in the exemplary embodiment shown in Figures 1A and 1B, or a trackball, a thumbwheel, an optical trackpad, a navigation pad, a joystick, touch-sensitive interface, or other I/O interface. These navigation tools 127 may be located on a front face or surface 170 of the communication device 100 or may be located on any exterior surface of the communication device 100. Other auxiliary I/O subsystems can include external display devices and externally connected keyboards (not shown). While the above examples have been provided in relation to the auxiliary I/O subsystem 228, other subsystems capable of providing input or receiving output from the communication device 100 are considered within the scope of this disclosure. Additionally, other keys may be placed along the side of the communication device 100 to function as escape keys, volume control keys, scrolling keys, power switches, or user programmable keys, and may likewise be programmed accordingly.

As may be appreciated from Figures 1A and 1B, the communication device 100 comprises the lighted display 222 located above the keyboard 232 constituting a user input and suitable for accommodating textual input to the communication device 100. The front face 170 of the communication device 100 has a navigation row 70. As shown, the communication device 100 is of unibody construction, also known as a "candy-bar" design. In alternate embodiments, the communication device 100 can be "clamshell" or a "slider" design.

As described above, the communication device 100 may include the auxiliary input 228 that acts as a cursor navigation tool and which can be also exteriorly located upon the front face 170 of the communication device 100. Its front face location allows the tool to be easily thumb-actuable like the keys of the keyboard 232. An embodiment provides the navigation tool 127 in the form of the trackpad 121, which can be utilized to instruct two-dimensional screen cursor movement in substantially any direction, as well as act as an actuator when the trackpad 121 is depressed like a button. The placement of the navigation tool 127 may be above the keyboard 232 and below the display screen 222; here, it can avoid interference during keyboarding and does not block the operator's view of the display screen 222 during use, e.g., as shown in Figures 1A and 1B.

As illustrated in Figures 1A and 1B, the communication device 100 may be configured to send and receive messages. The communication device 100 includes a body 171 which may, in some embodiments, be configured to be held in one hand by an operator of the communication device 100 during text entry. The display 222 is included which is located on the front face 170 of the body 171 and upon which information is displayed to the operator during text entry. The communication device 100 may also be configured to send and receive voice communications such as mobile telephone calls. The communication device 100 may also include a camera (not shown) to allow the user to take electronic photographs which can be referred to as photos or pictures.

Furthermore, the communication device 100 is equipped with components to enable operation of various programs, as shown in Figure 2. In an exemplary embodiment, the flash memory 224 is enabled to provide a storage location for the operating system 257, device programs 258, and data. The operating system 257 is generally configured to manage other programs 258 that are also stored in memory 224 and executable on the processor 238. The operating system 257 honors requests for services made by programs 258 through predefined program 258 interfaces. More specifically, the operating system 257 typically determines the order in which multiple programs 258 are executed on the processor 238 and the execution time allotted for each program 258, manages the sharing of memory 224 among multiple programs 258, handles input and output to and from other device subsystems 242, and so on. In addition, operators can typically interact directly with the operating system 257 through a user interface usually including the keyboard 232 and display screen 222. While in an exemplary embodiment the operating system 257 is stored in flash memory 224, the operating system 257 in other embodiments is stored in read-only memory (ROM) or similar storage element (not shown). As those skilled in the art will appreciate, the operating system 257, device program 258 or parts thereof may be loaded in RAM 226 or other volatile memory.

When the communication device 100 is enabled for two-way communication within the wireless communication network 219, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the communication device 100 may require a unique identifier to enable the communication device 100 to transmit and receive signals from the communication network 219. Other systems may not require such identifying information. GPRS, UMTS, and EDGE use a smart card such as a Subscriber Identity Module (SIM) in order to allow communication with the communication network 219. Likewise, most CDMA systems use a Removable Identity Module (RUIM) in order to communicate with the CDMA network. A smart card can be used in multiple different communication devices 100. The communication device 100 may be able to operate some features without a smart card, but it will not be able to communicate with the network 219. A smart card interface 244 located within the communication device 100 allows for removal or insertion of a smart card (not shown). The smart card features memory and holds key configurations 251, and other information 253 such as identification and subscriber related information. With a properly enabled communication device 100, two-way communication between the communication device 100 and communication network 219 is possible.

If the communication device 100 is enabled as described above or the communication network 219 does not require such enablement, the two-way communication enabled communication device 100 is able to both transmit and receive information from the communication network 219. The transfer of communication can be from the communication device 100 or to the communication device 100. In order to communicate with the communication network 219, the communication device 100 in the presently described exemplary embodiment is equipped with an integral or internal antenna 218 for transmitting signals to the communication network 219. Likewise the communication device 100 in the presently described exemplary embodiment is equipped with another antenna 216 for receiving communication from the communication network 219. These antennae (216, 218) in another exemplary embodiment are combined into a single antenna (not shown). As one skilled in the art would appreciate, the antenna or antennae (216, 218) in another embodiment are externally mounted on the communication device 100.

When equipped for two-way communication, the communication device 100 features the communication subsystem 211. As is understood in the art, this communication subsystem 211 is modified so that it can support the operational needs of the communication device 100. The subsystem 211 includes a transmitter 214 and receiver 212 including the associated antenna or antennae (216, 218) as described above, local oscillators (LOs) 213, and a processing module 220 which in the presently described exemplary embodiment is a digital signal processor (DSP) 220.

It is contemplated that communication by the communication device 100 with the wireless network 219 can be any type of communication that both the wireless network 219 and communication device 100 are enabled to transmit, receive and process. In general, these can be classified as voice and data. Voice communication generally refers to communication in which signals for audible sounds are transmitted by the communication device 100 through the communication network 219. Data generally refers to all other types of communication that the communication device 100 is capable of performing within the constraints of the wireless network 219.

The keyboard 232 can include a plurality of keys that can be of a physical nature such as actuable buttons, or they can be of a software nature, typically constituted by virtual representations of physical keys on the display screen 222 (referred to herein as "virtual keys"). It is also contemplated that the user input can be provided as a combination of the two types of keys. Each key of the plurality of keys has at least one actuable action which can be the input of a character, a command or a function. In this context, "characters" are contemplated to exemplarily include alphabetic letters, language symbols, numbers, punctuation, insignias, icons, pictures, and even a blank space.

In the case of virtual keys, the indicia for the respective keys are shown on the display screen 222, which in one embodiment is enabled by touching the display screen 222, for example, with a stylus, finger, or other pointer, to generate the character or activate the indicated command or function. Some examples of display screens 222 capable of detecting a touch include resistive, capacitive, projected capacitive, infrared and surface acoustic wave (SAW) touchscreens.

Physical and virtual keys can be combined in many different ways as appreciated by those skilled in the art. In one embodiment, physical and virtual keys are combined such that the plurality of enabled keys for a particular program or feature of the communication device 100 is shown on the display screen 222 in the same configuration as the physical keys. Using this configuration, the operator can select the appropriate physical key corresponding to what is shown on the display screen 222. Thus, the desired character, command or function is obtained by depressing the physical key corresponding to the character, command or function displayed at a corresponding position on the display screen 222, rather than touching the display screen 222.

While the above description generally describes the systems and components associated with a mobile communication device, the communication device 100 could be another communication device such as a PDA, a laptop computer, desktop computer, a server, or other communication device. In those embodiments, different components of the above system might be omitted in order provide the desired communication device 100. Additionally, other components not described above may be required to allow the communication device 100 to function in a desired fashion. The above description provides only general components and additional components may be required to enable the system to function. These systems and components would be appreciated by those of ordinary skill in the art.

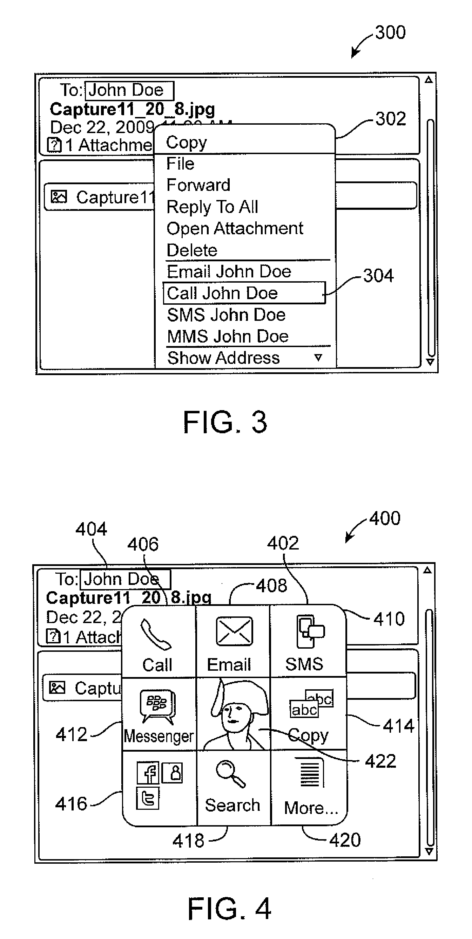

Referring to Figure 3, a screenshot of a conventional menu in accordance with an exemplary embodiment is illustrated. As shown, a screenshot 300 having a menu 302 displayed in response to a request for the menu 302. In order for a user to select a menu option, the user can use a navigational tool 127, e.g., a trackpad 121, to select the desired option, e.g., "Call John Doe" 304. However, to select the desired option, the user can have trouble navigating the list of menu options.

Referring to Figure 4, a screenshot of a graphical context short menu in accordance with an exemplary embodiment is illustrated. As shown, a screenshot 400 having a graphical context short menu 402 can be displayed in response to a user requesting the menu 402. The graphical context short menu 402 can include menu options based on the context that the menu was selected. In this example, the context is an email message with the contact 404 that the email message is addressed to, e.g., "John Doe," being highlighted. The menu 402 that is displayed provides menu items that are related to the highlighted contact 404. For example, the user is presented with the following options: call 406 (e.g., call John Doe), email 408 (e.g., send an email to John Doe), SMS 410 (e.g., send a text message to John Doe), messenger 412 (e.g., chat with John Doe), copy 414 (e.g., copy "John Doe"), social networks 416 (e.g., communicate with John Doe using a social network), search 418 (e.g., search for "John Doe," and more 420 (e.g., display more menu items). The search 418 function can search within the application using the search string. In one or more embodiments, the search 418 function can search through the entire operating systems. For example, if the search 418 function is selected, a search for "John Doe" can be done in the email system, as well as the SMS, MMS, and BBM applications. As explained in further detail below, the menu 402 can include an icon 422 for John Doe.

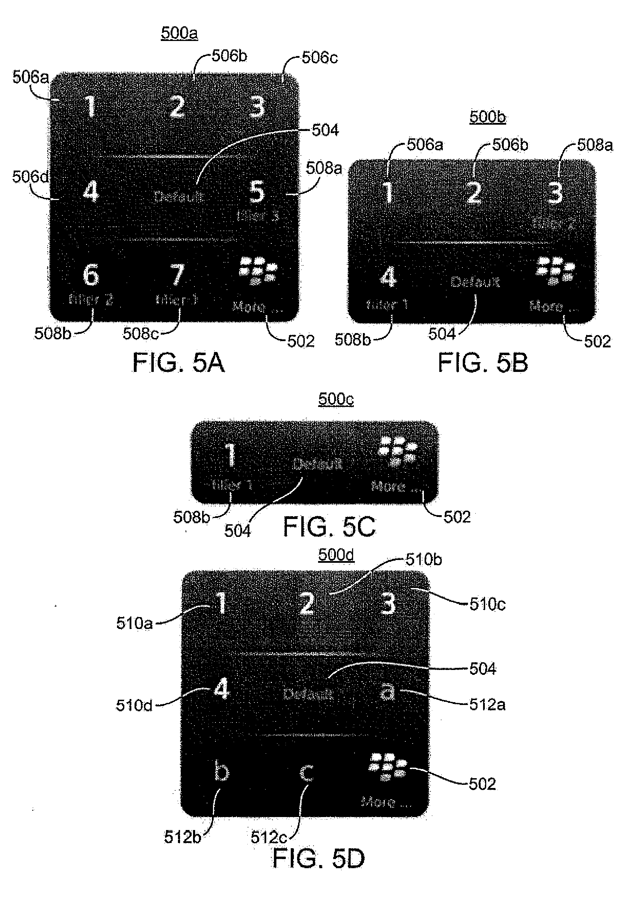

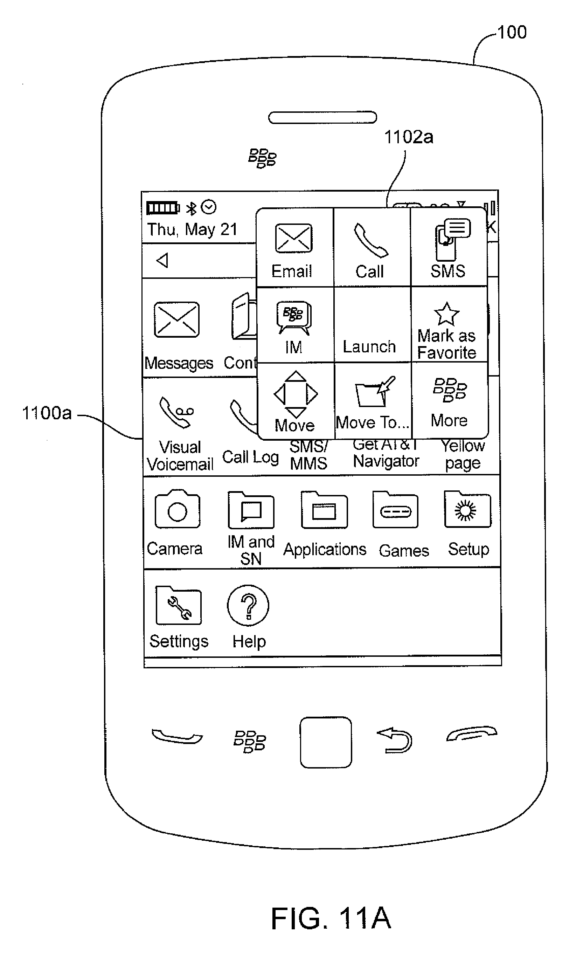

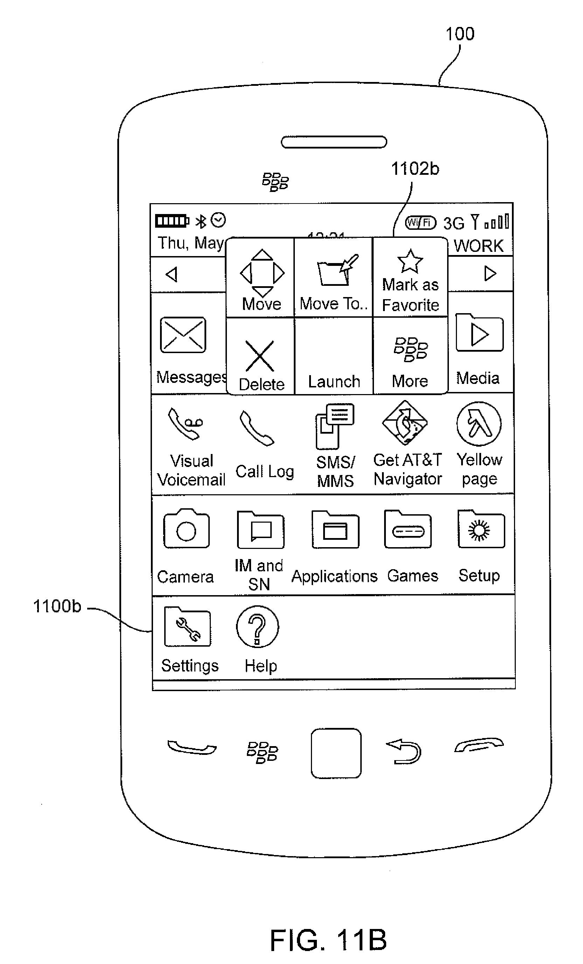

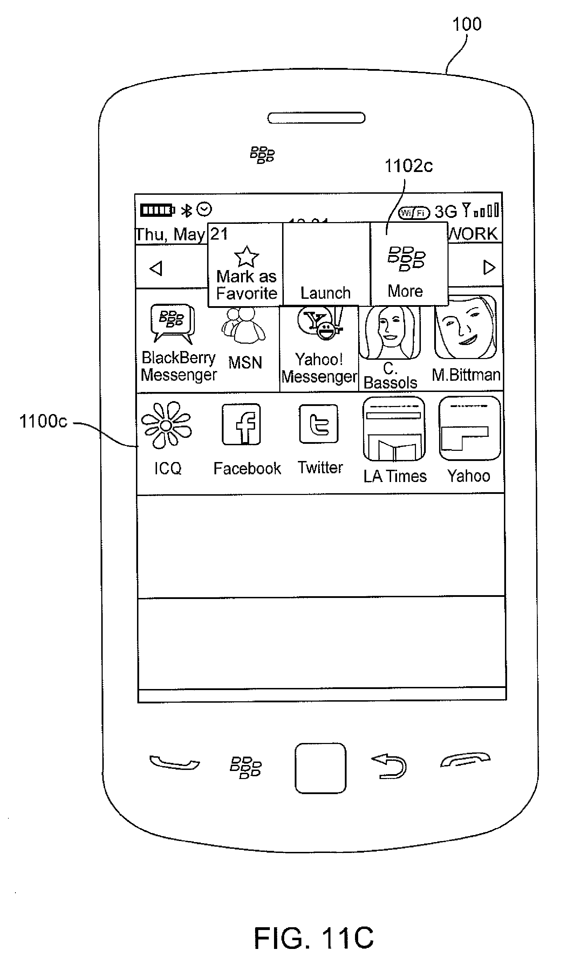

Referring to Figures 5A-5C, graphical context short menus showing the layout of the different menus in accordance with exemplary embodiments are illustrated. As shown in Figure 5A, the graphical context short menu 500a can include nine (9) menu items in a three by three grid (e.g., three columns by three rows). Specifically, the graphical context short menu 500a can include eight menu (8) items and a more menu items 502. Figure 11A shows a screenshot 1100a of a mobile communication device 100 displaying a graphical context short menu 1102a having nine (9) menu items. As shown in Figure 5B, the graphical context short menu 500b can include six (6) menu items in a three by two grid (e.g., three columns by two rows). Specifically, the graphical context short menu 500b can include five (5) menu items and a more menu items 502. Figure 11B shows a screenshot 1100b of a mobile communication device 100 displaying a graphical context short menu 1102b having six (6) menu items. As shown in Figure 5C, the graphical context short menu 500c can include three (3) menu items in a three by one grid (e.g., three columns by one row). Specifically, the graphical context short menu 500c can include two (2) menu items and a more menu items 502. Figure 11C shows a screenshot 1100c of a mobile communication device 100 displaying a graphical context short menu 1102c having three (3) menu items. In other embodiments, the number of menu items can include more or less menu items. The layout of the menu can also take different forms, e.g., circular.

The graphical context short menu 500 can be a popup grid menu. The graphical context short menu 500 can be a dynamic menu that includes menu items from a full or extended menu. In other words, the graphical context short menu 500 can be menu items that are a subset of a full or extended menu. A full or extended menu can list all available menu items at that particular level and can be accessed by selecting the more menu items 502. The full or extended menu can be graphical or non-graphical.

The menu items for the graphical short menu 500 can be designed in different ways. For example, each graphical context short menu 500 can include menu items that are predefined, programmer preferences, selected or built by the user, the most commonly used commands in the context, or the user's most frequently used commands in the context. Context can mean based on the application, function selected, or screen context. There are two types of context menus: disambiguation and contextual actions. A disambiguation menu is displayed to clarify what action should be taken when clicking on an item. For example, when a contact name is highlighted in an address book, the menu can clarify how the user would like to communicate with the contact, e.g., email, phone, or SMS, etc. A contextual actions menu provides more actions than the default action. For example, when a contact name is highlighted in an email message, the menu can default to the "reply" menu item but can also include other items such as phone or SSM.

The menu items can be positioned in the graphical context short menus 500 as consistently as possible to leverage muscle memory. For example, a default menu option 504 can be placed in the center of each menu 500 and the more menu item 502 can be placed in the bottom right of each menu 500. By including the more menu item 502 in each menu 500, there are no dead ends in the menus 500 because there is provided a means to access a full menu. The graphical context short menus 500 can provide available actions for on-screen items. By using the graphical context short menus 500, a user can use the navigational tool 127 to select a desired menu option. The grid format can be visually appealing and can allow for easier navigation since the selectable area for a menu option is larger compared to a traditional list menu comprising text only The menu options can also be selectable using a double click action, e.g., clicking on a menu option once to highlight and again to select it. In one or more embodiments, the default menu option 504 can be highlighted when the graphical context short menu 500 is displayed. In such embodiments, the default menu option 504 can require only one click. As discussed below, the menu options can be selected using other selection means.

Referring to Figures 5A-5C again, each graphical context short menu 500 can include the more menu item 502, default menu item 504, top menu items 506, and filler menu items 508. As shown in Figure 5A, the graphical context short menu 500a can include the more menu item 502, the default menu item 504, four (4) top menu items 506a-d, and three (3) filler menu items 508a-c. As shown in Figure 5B, the graphical context short menu 500b can include the more menu item 502, the default menu item 504, two (2) top menu items 506a-b, and two (2) filler menu items 508a-c. As shown in Figure 5C, the graphical context short menu 500b can include the more menu item 502, the default menu item 504, and one filler menu item 508a.

Referring to Figure 5D, a graphical context short menu 500d showing the layout of the menu in which there are two (2) contextual actions in accordance with exemplary embodiments is illustrated. As shown, the graphical context short menu 500d includes the more menu item 502, the default menu item 504, a first set of contextual action items 510a-d which fill the numbers, and a second set of contextual action items 512a-c which fill the letters.

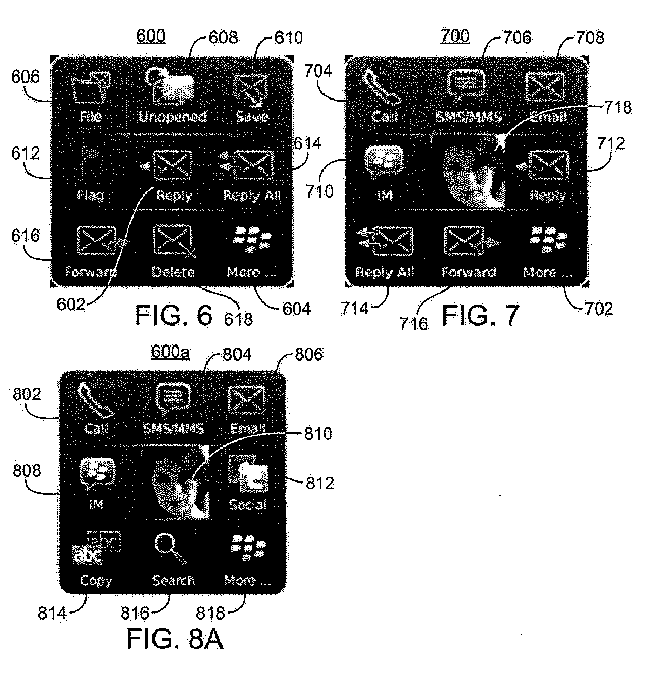

Referring to Figure 6, a graphical short menu with a single set of contextual actions for an email application in accordance with an exemplary embodiment is illustrated. As shown, the graphical context short menu 600 having a default menu option 602 (e.g., reply) in the center of the grid, the more menu items 604 in the bottom right of the grid, and six more options: file 606, mark as unopened 608, save 610, flag 612, reply all 614, forward 616, and delete 618. The graphical context short menu 602 can be the menu associated with a message list. The graphical context short menu 600 can be displayed when an email (not shown) is selected, using a navigational tool 127, from a list of email message.

Referring to Figure 7, a graphical context short menu with two sets of contextual actions for communicating with a contact in accordance with an exemplary embodiment is illustrated. As shown, the graphical context short menu 700 having the more menu items 702 in the bottom right of the grid, a first set of contact contextual actions 704-710, and a second set of email contextual actions 712-716. The first set of contact contextual actions includes call 704, SMS/MMS 706, email 708, and IM 710. The second set of email actions includes reply 712, reply all 714, and forward 716. Figure 7 also includes an icon associated with a contact 718 ("a contact icon"). The contact icon 718 can be in the center of the grid. The contact icon 718 can be a picture, profile picture, icon, avatar, a name, or any other identifier identifying the contact. The contact icon 718 can be context specific, e.g., related to the specific contact. When a user selects the contact icon 718 in a graphical context short menu, the contact menu 700 of Figure 7 can pop up. In other embodiments, the contact icon 718 can be positioned in other locations in the grid. In one or more embodiments, the contact icon can be a banner providing context related information, e.g., the name of the sender or recipient of an email, the subject matter of an email, the date, or other context related information. The banner can be displayed on top of the graphical context short menu (not shown).

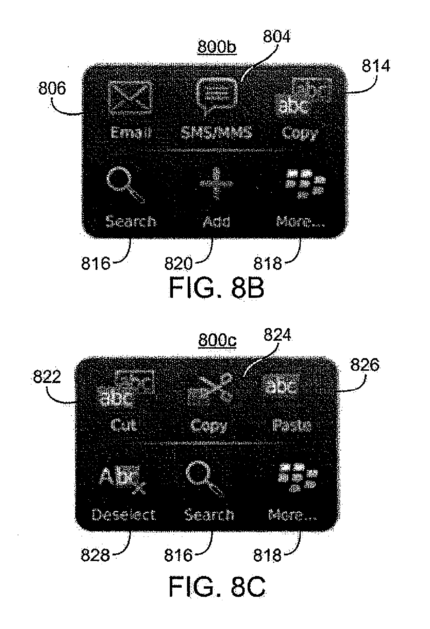

Referring to Figures 8A-8C, some common graphical context short menus in accordance with exemplary embodiments are illustrated. Referring to Figure 8A, the graphical context short menu 800a for an existing contact can include contextual options to communicate with the existing contact using various means. As shown, the graphical context short menu 800a can include the following options: call 802, SMS/MMS 804, email 806, IM, 808, contact icon 810, social network or networks 812, copy 814, search 816, and more menu items 818. Referring to Figure 8B, the graphical context short menu 800b for a new contact can include contextual options to add or communicate with the contact. As shown, the graphical context short menu 800b can include the following options: email 806, SMS/MMS 804, copy 814, search 816, add 820, and more menu items 818. Referring to Figure 8C, the graphical context short menu 800c can include contextual options for editing text. As shown, the graphical context short menu 800c can include the following options: cut 822, copy 824, paste 826, deselect 828, search 816, and more menu items 818.

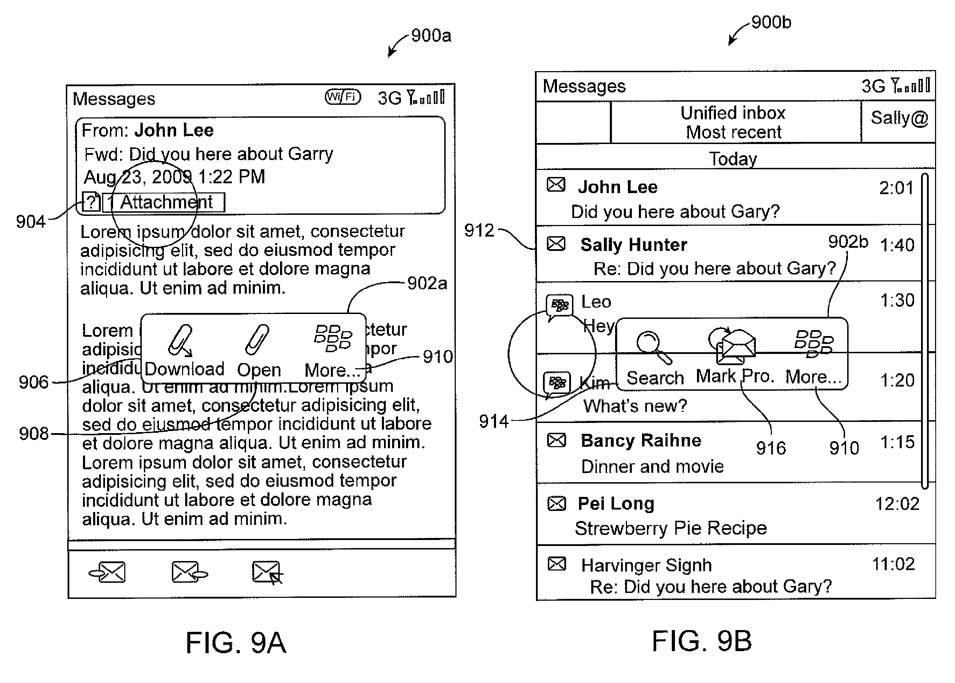

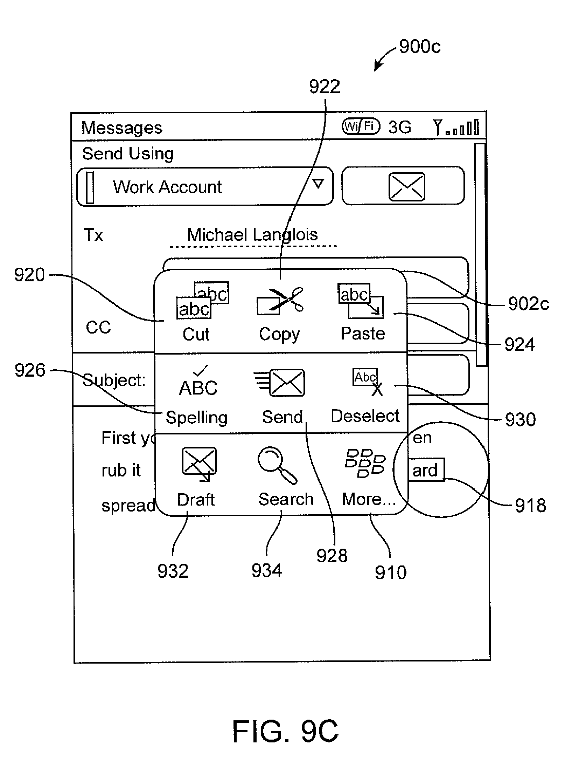

Referring to Figures 9A-9C, screenshots of graphical context short menus for messages in accordance with exemplary embodiments are illustrated. Referring to Figure 9A, the screenshot 900a can include a graphical context short menu 902a for an attachment 904 including options related to the attachment 904. The contextual options can include download the attachment 906, open the attachment 908, and more menu items 910. In addition, a banner (not shown) can be displayed providing the name of the attachment. Referring to Figure 9B, the screenshot 900b can include a graphical context short menu 902b for a header bar 912 can include options related to the header bar 912. The contextual options can include search 914, mark priority 916, and more menu items 910. In addition, a banner (not shown) can be displayed providing the type of the message. Referring to Figure 9C, the screenshot 900c can include a graphical context short menu 902c for selected text 918 in an email that is being generated. The contextual options can include cut 920, copy 922, paste 924, spelling 926, send 928, deselect 930, draft 932, search 934 and more menu items 908.

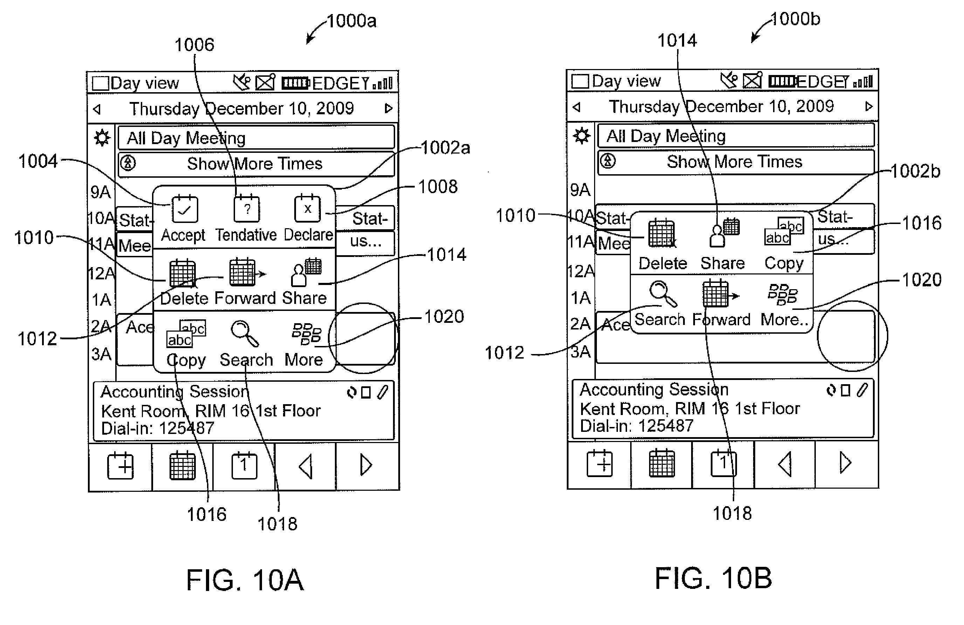

Referring to Figures 10A and 10B, screenshots of graphical context short menus for calendar events in accordance with exemplary embodiments are illustrated. Referring to Figure 10A, the screenshot 1000a can include a graphical context short menu 1002a for a meeting event can include options related to the event. The contextual options can include accept 1004, tentative 1006, decline 1008, delete 1010, forward 1012, share 1014, copy 1016, search 1018, and more menu items 1020. Referring to Figure 10B, the screenshot 1000b can include a graphical context short menu 1002b for a private event can include options related to the event. The contextual options can include delete 1010, share 1014, copy 1016, search 1018, forward 1012, and more menu items 1020.

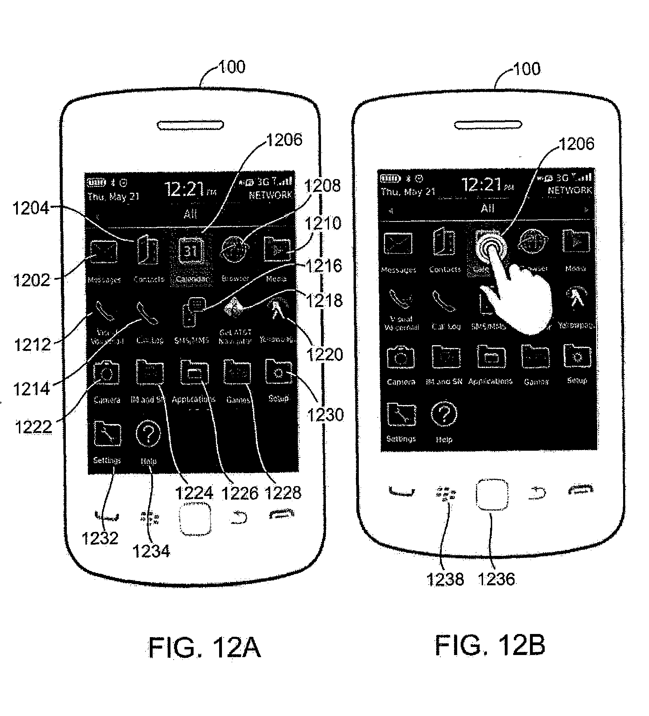

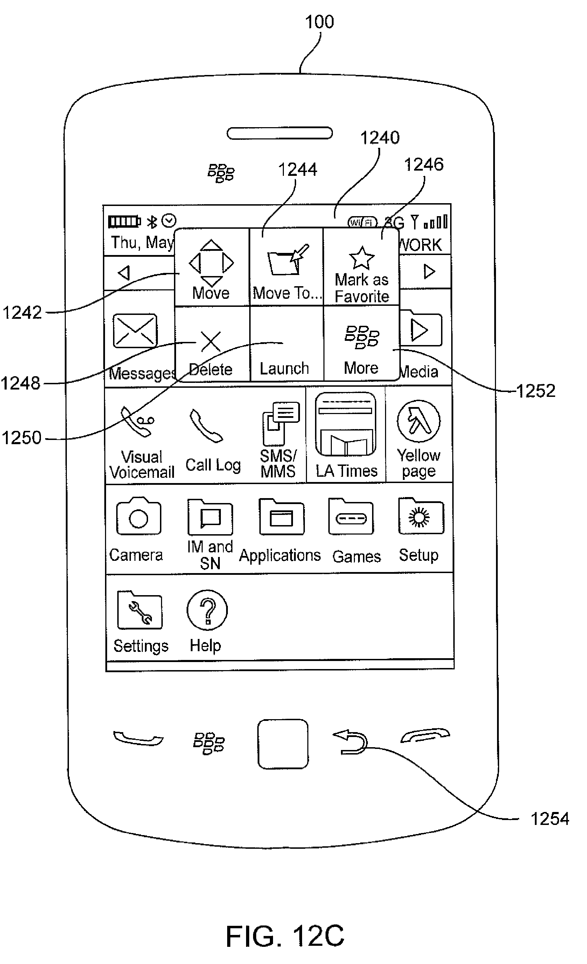

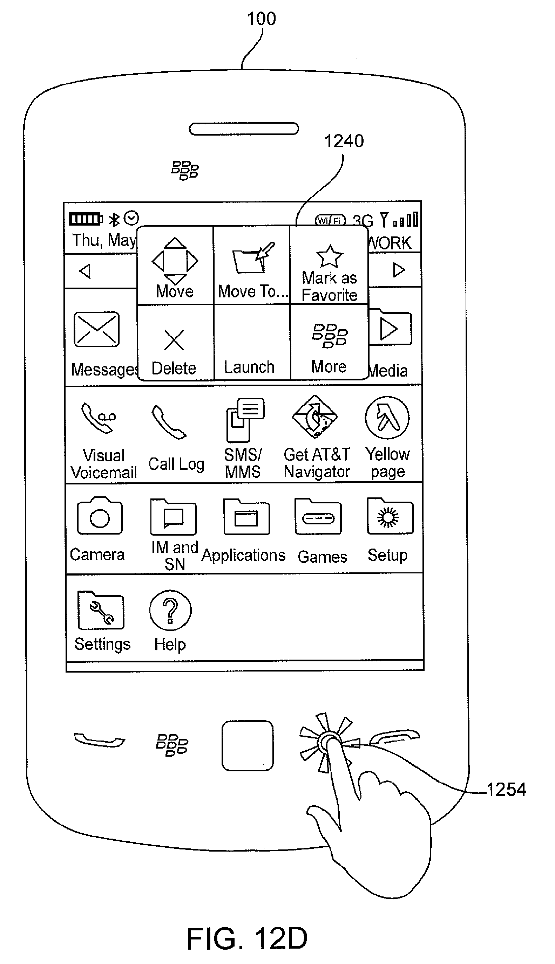

Referring to Figures 12A-12D, mobile communication devices displaying applications in accordance with exemplary embodiments are illustrated. As shown in Figure 12A, a mobile communication device 100 can display various applications. The applications can include: messages 1202, contacts 1204, calendar 1206, browser 1208, media 1210, visual voicemail 1212, call log 1214, SMS/MMS 1216, get AT&T navigator 1218, yellowpages 1220, camera 1222, AM and SN 1224, applications 1226, games 1228, setup 1230, settings 1232, and help 1234. In this example, the calendar 1206 application is highlighted. As shown in Figure 12B, the user can select the highlighted application to cause a graphical context short menu to be displayed. The selection to cause the graphical context short menu can occur using various means. For example, using a touch screen, a user can touch and hold the highlighted application 1206 for a predetermined time, e.g., one to two seconds. In another example, a user can click and hold on the highlighted application 1206 using a track pad 1236 or a track ball (not shown) for a predetermined time, e.g., one to two seconds. In yet another example, a user can press a menu button 1238. In other examples, the user can use other means to cause the graphical context short menu to be displayed, e.g., other known means to cause a menu to be displayed, e.g., pressing another designated menu button. As shown in Figure 12C, the graphical context short menu 1240 can be displayed. As shown, the graphical context short menu 1240 can include the following options: move 1242, move to 1244, mark as favorite 1246, delete 1248, launch 1250, and more menu items 1252. The launch 1250 option is default designated. As shown in Figure 12D, the user can have the graphical context short menu 1240 disappear by pressing the exit button 1254. In other embodiments, other means to cause the graphical context short menu 1240 can be used.

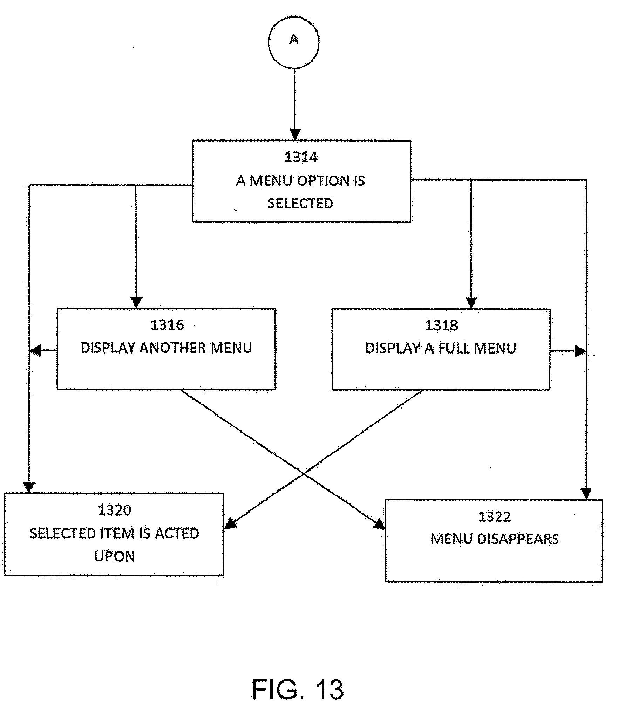

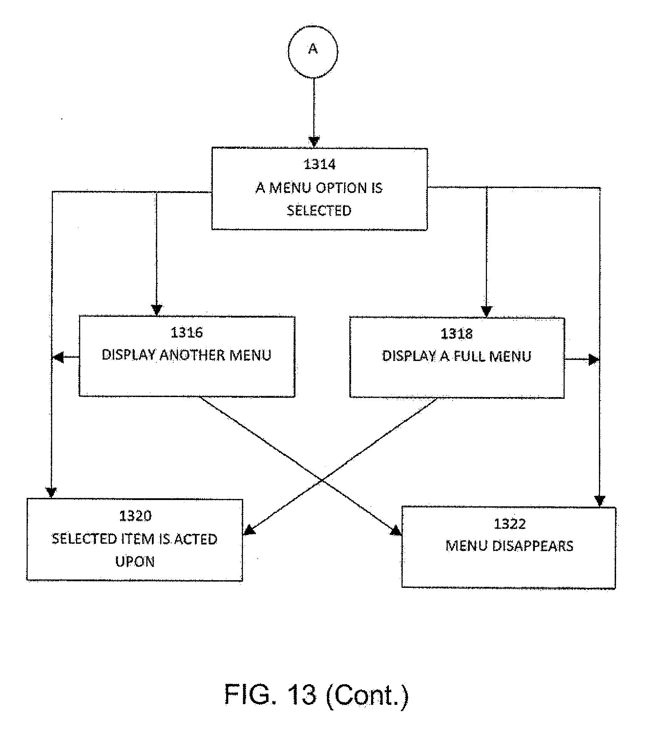

Referring to Figure 13, a flowchart of a method for displaying a graphical context short menu in accordance with an exemplary embodiment is illustrated. The exemplary method 1300 is provided by way of example, as there are a variety of ways to carry out the method. In one or more embodiments, the method 1300 is performed by the menu program. The method 1300 can be executed or otherwise performed by one or a combination of various systems. The method 1300 described below can be carried out using the communication devices 100 and communication network shown in Figures 1A, 1B, and 2 by way of example, and various elements of these figures are referenced in explaining exemplary method 1300. Each block shown in Figure 1300 represents one or more processes, methods or subroutines carried out in exemplary method 1300. The exemplary method 1300 can begin at block 1302.

At block 1302, a page can be displayed. For example, the page can be displayed on the display or display screen 222 of the mobile communication device 100. The page can include information associated with a contact. After displaying the page, the method 1300 can proceed to block 1304.

At block 1304, a menu request can be generated. For example, a user can select or highlight an object (e.g., an application, a message, a header, a contact or text) using the navigational tool 127. The microprocessor 238 or menu program can generate the menu request. After the menu request is generated, the method 1300 can proceed to block 1306.

At block 1306, the menu request can be received. For example, the microprocessor 238 or menu program can receive the menu request. After receiving the menu request, the method 1300 can proceed to block 1308.

At block 1308, a determination can be made whether a contact is associated with the displayed information. For example, the microprocessor 238 or menu program can determine if a contact is associated with the displayed information. If a contact is associated with the displayed information the method 1300 can proceed to block 1310. If a contact is not associated with the displayed information the method 1300 can proceed to block 1312.

At block 1310, a graphical context short menu is displayed including a contact icon. For example, the microprocessor 238 or menu program can display a graphical context short menu having the contact icon in the center of the grid as shown in Figure 7. Alternatively, if there is no contact associated with the displayed information, context associated with the selected object can be displayed in the center of the grid, e.g., the date of a selected day. Alternatively, the context associated with the selected object can be displayed in a banner across the top of the graphical context short menu. After displaying the graphical context short menu including the contact icon, the method 1300 can proceed to block 1314.

At block 1312, a graphical context short menu is displayed with a default option selected or highlighted. For example, the microprocessor 238 or menu program can display a graphical context short menu having a default option selected or highlighted in the center of the grid as shown in Figure 6. After displaying the graphical context short menu including the default option, the method 1300 can proceed to block 1314.

At block 1314, a menu option is selected. For example, the user can use the navigational tool 127 to select a menu option. The microprocessor 238 or menu program can receive the selected menu option. Depending on the selected menu option, the method can proceed to anther block accordance with the selected menu option. For example, the method can proceed to block 1316, 1318, 1320, or 1322.

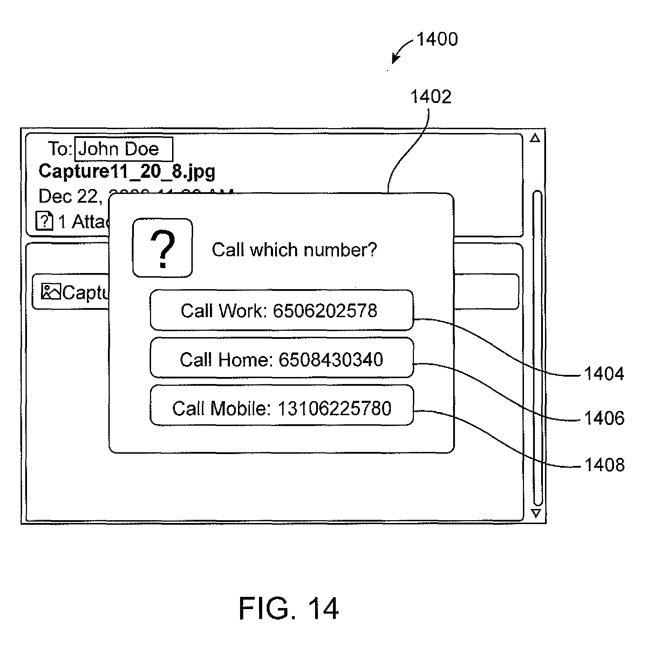

At block 1316, in the event the selected option is an unambiguous selection, another menu can be displayed. The menu can be graphical (shown in Figure 14) or non-graphical (not shown). For example, if the call option 704 of Figure 7 is selected and there are multiple numbers to call the contact, then another menu listing two or more numbers to call the contact can be displayed. As shown in Figure 14, a screenshot 1400 displaying another graphical menu 1402 listing three (3) different numbers to call Sally Hunter can be displayed. The menu options can include calling her at work 1404, at home 1406 or on her mobile phone 1408. A menu option can be highlighted or selected, e.g., calling her at work 1404. The microprocessor 238 or menu program can display the non-graphical menu 1402 on the display 222 of the mobile communication device 100. After displaying the non-graphical menu, the method 1300 can proceed to block 1320 or 1322.

At block 1318, in the event the more menu items option is selected, a full menu can be displayed. For example, if the more menu items option 702 in Figure 7 is selected, the microprocessor 238 or menu program can display the full menu on the display 222 of the mobile communication device 100. After displaying the full menu, the method can proceed to block 1320 or 1322.

At block 1320, in the event a menu item is selected, the selected menu item can be acted on. For example, if the call option 704 of Figure 7 is selected and only one telephone number is associated with Sally Hunter, then the mobile communication device 100 can place a call to Sally Hunter at the known number. For example, the microprocessor 238 or menu program can display a page or perform the selected item or task. Such tasks can include SMS/MMS 706, email 708, IM 710, reply 712, reply all 714, or forward 716 as shown in Figure 7.

At block 1322, in the event the exit button 1252 is selected, the menu, e.g., a graphical context short menu or a full menu, can disappear. For example, the microprocessor 238 of menu program can remove the displayed menu.

The technology can take the form of an entirely hardware embodiment, an entirely software embodiment or an embodiment containing both hardware and software elements. In one embodiment, the technology is implemented in software, which includes but is not limited to firmware, resident software, microcode, etc. Furthermore, the technology can take the form of a computer program product accessible from a computer-usable or computer-readable medium providing program code for use by or in connection with a computer or any instruction execution system. For example, method 1300 can be a computer program product or can be program code on a computer-readable medium. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof) as known to those skilled in the art.

A data processing system suitable for storing program code and for executing program code will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

Exemplary embodiments have been described hereinabove regarding the implementation of a smart card receiving assembly for a mobile communication device. Various modifications to and departures from the disclosed embodiments will occur to those having skill in the art. The subject matter that is intended to be within the spirit of this disclosure is set forth in the following claims.

## Claims

1. A method for displaying a menu on a display screen of a mobile communication (100) device, the method comprising:
displaying (1302) information associated with a contact (404);
receiving (1306) a request for a menu;
displaying (1308), in response to the request, a graphical context short menu (402) including menu items (406, 408, 410, 414, 412, 414, 416, 418) based on context associated with the displayed information,
wherein the graphical context short menu (402) includes an icon (422) associated with the contact (404).

2. The method of claim 1 wherein the displayed graphical context short menu (402) further comprises a menu item (420) for displaying more menu items.

3. The method of claim 2 further displaying (1316), in response to the menu item (420) for more menu items being selected, a graphical list of menu items which includes menu items not displayed in the graphical context short menu.

4. The method of claim 2 further displaying, in response (1318) to the menu item (420) for more menu items being selected, a graphical list of menu items which includes menu items in addition to the menu items displayed in the graphical context short menu.

5. The method as recited in any one of claims 1-4 further comprising displaying (1316), in response to a displayed menu item being selected, a graphical list of menu items associated with the selected menu item.

6. The method as recited in any one of claims 1-5 wherein the displayed (1308) graphical context short menu (402) further comprises one of two menu items, five menu items, and eight menu items in addition to the icon (422) associated with the contact (404).

7. The method as recited in any one of claims 1-6 wherein the displayed graphical context short menu (402) further comprises eight menu items in a grid having three rows and three columns with the icon (422) associated with the contact (404) being displayed in a center of the grid.

8. The method of claim 7 wherein the displayed graphical context short menu (402) further comprises a menu item (420) for more menu items, with the menu item for more menu items being displayed on a bottom right portion of the grid.

9. The method as recited in any one of claims 1-8 wherein the displayed graphical context short menu (402) is displayed over an existing display (400).

10. The method as recited in any one of claims 1-9 wherein the displayed graphical context short menu (402) is one of a disambiguation menu and a contextual action menu, wherein a disambiguation menu includes menu items of potential actions without a single primary action and wherein a contextual action menu includes a designated primary action along with other potential actions.

11. The method as recited in any one of claims 1-10 further comprising generating a request for the graphical context short menu (902a) in response to an object (904) being highlighted and held using a navigational tool (1236).

12. The method as recited in any one of claims 1-11 further comprising generating a request for the graphical context short menu (902a) in response to an object (904) being highlighted and clicked on using a navigational tool (1236).

13. The method as recited in any one of claims 1-12 wherein the icon (422) associated with the contact comprises at least one of an image of the contact, an avatar, or name of the contact.

14. The method as recited in any one of claims 1-13 wherein the displayed information associated with the contact (404) is one of a list (900b) of email messages including an email from the contact, an email from the contact, a list of contacts including the contact, and a contact entry for the contact.

15. A mobile communication device (100) programmed to display, upon user request a menu on a display screen of the device, said device comprising:
the display screen (222) on which information (400) associated with a contact (404) is displayed;
a keyboard (232) located below said display screen (222) and configured to accommodate textual input to the mobile communication device; and
a microprocessor (238) having a menu program (258) associated therewith for controlling operation of said mobile communication device (100), said menu program (258) configured to process a method as recited in any one of claims 1-14.
